# EUROPÄISCHE PATENTSCHRIFT

(11) **EP 4 523 940 B1**
(45) Veröffentlichungstag und Bekanntmachung des Hinweises auf die Patenterteilung: **09.09.2026**
(21) Anmeldenummer: 24190251.9
(22) Anmeldetag: 23.07.2024
(51) Int. Cl.: B60K 35/22, B60K 35/28, A01D 34/00, A01D 41/127, G01C 21/00

(54) **ANZEIGEVORRICHTUNG FÜR EINE SELBSTFAHRENDE LANDWIRTSCHAFTLICHE ARBEITSMASCHINE**
DISPLAY DEVICE FOR A SELF-PROPELLED AGRICULTURAL WORKING MACHINE
DISPOSITIF D'AFFICHAGE POUR UNE MACHINE DE TRAVAIL AGRICOLE AUTOMOTRICE

(30) Priorität: 14.09.2023 DE 102023124819
(43) Veröffentlichungstag der Anmeldung: 19.03.2025
(73) Patentinhaber: CLAAS Selbstfahrende Erntemaschinen GmbH, 33428 Harsewinkel (DE)
(72) Erfinder: Bormann, Bastian, 33334 Gütersloh (DE); Schröder, Maximilian, 33330 Gütersloh (DE); Heufekes, Maik, 48147 Münster (DE)
(74) Vertreter: CLAAS Gruppe

(56) Entgegenhaltungen:
- US-A1- 2016 106 038
- US-A1- 2020 326 727
- US-A1- 2022 113 729

## Beschreibung

Die vorliegende Anmeldung betrifft eine Anzeigevorrichtung für eine selbstfahrende landwirtschaftliche Arbeitsmaschine zum Anzeigen mindestens einer Vorfeldinformation eines geografischen Vorfelds der Arbeitsmaschine gemäß dem Oberbegriff von Anspruch 1. Des Weiteren betrifft die Anmeldung eine selbstfahrende landwirtschaftliche Arbeitsmaschine gemäß dem Oberbegriff von Anspruch 8.

Selbstfahrenden landwirtschaftlichen Arbeitsmaschinen wie Mähdreschern oder Feldhäckslern sind typischerweise eine Vielzahl von Arbeitsorganen zur Verarbeitung eines von einem abzuerntenden Feld aufgenommenen Ernteguts in Rahmen eines Ernteprozesses zugeordnet. Im Sinne der vorliegenden Erfindung wird dabei unter "Erntegut" ein gesamter aufgenommener Gutstrom verstanden, also einschließlich derjenigen Körner, welche noch nicht als Korngut aus dem Gutstrom gewonnen wurden, und den Körnern, welche ggf. in dem Gutstrom als Verlust verbleiben und mit dem Stroh abgelegt werden.

Ein Arbeitsorgan kann beispielhaft als ein an die Arbeitsmaschine anbringbares Vorsatzgerät, als Schrägförderer, als Dreschvorrichtung, als Abscheidevorrichtung, als Reinigungsvorrichtung, als Kornelevator, als Überkehrschnecke, als Korntankentleervorrichtung, als Nachbeschleuniger, als Kornschnecke und/oder als Korntankschnecke ausgebildet sein.

Eine als Mähdrescher ausgestaltete selbstfahrende landwirtschaftliche Arbeitsmaschine dient der Mahd und dem Drusch von Körnerfrüchten. Der Arbeitsmaschine sind dabei in aller Regel eine Reihe von Arbeitsorganen wie Schneidwerk, Dreschwerk, Abscheideanordnung, Reinigungsanordnung und Verteilanordnung zugeordnet. Ein Drusch erfolgt durch das Dreschwerk, welches aus dem von dem Mähdrescher durch das Schneidwerk aufgenommenen Erntegut Korngut gewinnt, das nach dem Dreschen der Abscheideanordnung und anschließend über die Reinigungsanordnung einem Getreidetank zugeführt wird. Als weitere Bestandteile des Ernteguts bleiben z.B. die Spreu und das Stroh übrig, welche entweder über das Feld verteilt oder - im Falle des Strohs - auf Schwad z.B. zur späteren Aufnahme durch eine Ballenpresse gelegt werden können.

Die Arbeitsorgane werden dabei durch Vorgabe verschiedener Maschinenparameter angesteuert, die während des Ernteprozesses anzupassen sind. Mit der Einstellung dieser Maschinenparameter lässt sich eine zumindest teilweise autonome Einstellung und Optimierung des Ernteprozesses erzielen.

Ein Dreschwerk kann beispielsweise durch die Vorgabe verschiedener Dreschwerksparameter angesteuert werden. Hierunter fallen in Abhängigkeit vom Aufbau des Dreschwerks Antriebsparameter wie beispielsweise eine Trommeldrehzahl oder sonstige Bewegungskennzahlen der Dreschtrommel, sowie eine Korbweite - also der Abstand zwischen der Dreschtrommel und einem Dreschkorb. Der optimalen Ansteuerung der Arbeitsorgane kommt für eine erzielbare Erntequalität und einen erzielbaren Erntegutdurchsatz besondere Bedeutung zu.

Weiterhin weist die selbstfahrende landwirtschaftliche Arbeitsmaschine typischerweise mindestens einen Fahrantrieb zum Antrieb der Arbeitsmaschine auf. Eine von dem Fahrantrieb typischerweise einzustellende Fahrgeschwindigkeit bestimmt dabei in Verbindung mit einer Bestandsdichte des abzuerntenden Felds den durch die Arbeitsmaschine hindurchlaufenden Erntegutdurchsatz.

Im Sinne der vorliegenden Erfindung ist der Begriff "Bestandsdichte" weit auszulegen. Er umfasst jede Angabe, die Aufschluss darüber gibt, welche Pflanzenmenge pro Fläche im abzuerntenden Feld vorhanden ist. Dies kann beispielsweise die Anzahl der Pflanzenstängel pro Fläche, das Pflanzenvolumen pro Fläche oder dergleichen sein. Der Begriff "Fläche" bezeichnet hier die Fläche, oder einen Teil der Fläche, des abzuerntenden Felds.

Als "Erntegutdurchsatz" wird im Sinne der vorliegenden Erfindung die pro Zeit von der selbstfahrenden landwirtschaftlichen Arbeitsmaschine aufgenommene Menge des Ernteguts verstanden.

Aufgrund der vorbeschriebenen Korrelation hängen eine Vielzahl von Maschinenparametern der Arbeitsorgane der selbstfahrenden Arbeitsmaschine von der Fahrgeschwindigkeit ab. Der Fahrantrieb kann dabei beispielsweise als Verbrennungsmotor, insbesondere in Form eines Dieselmotors, ausgebildet sein und neben einem Vortrieb der Arbeitsmaschine auch zum Antrieb der Arbeitsorgane der Arbeitsmaschine vorgesehen sein. Der Fahrantrieb ermöglicht einen Vortrieb der Arbeitsmaschine mit einer Fahrgeschwindigkeit in eine Fahrtrichtung entlang des abzuerntenden Felds.

Ferner umfasst die Arbeitsmaschine in aller Regel mindestens ein Vorfelderfassungssystem, welches Informationen hinsichtlich eines geografischen Vorfelds der selbstfahrenden Arbeitsmaschine erfasst.

Im Sinne der vorliegenden Erfindung wird unter einem "geographischen Vorfeld" eine Umgebung der selbstfahrenden Arbeitsmaschine verstanden. Das Vorfeld betrifft mithin nichts, was sich innerhalb der Arbeitsmaschine abspielt. Dem Sensor ist ein räumlicher Geltungsbereich zugeordnet, der sich in der Umgebung der Arbeitsmaschine, vorzugsweise unmittelbar vor der Arbeitsmaschine in Fahrtrichtung betrachtet, befindet. Zu dem geografischen Vorfeld der selbstfahrenden Arbeitsmaschine zählt mithin insbesondere das abzuerntende Feld bzw. zumindest ein aktuell abzuerntender Teilabschnitt des Felds.

Weiterhin weist die Arbeitsmaschine in aller Regel ein Steuersystem auf. Das Steuersystem weist wiederum mindestens eine Recheneinheit zur Verarbeitung der von dem Vorfelderfassungssystem erfassten Informationen zu mindestens einem Maschinenparameter zur Ansteuerung des mindestens einen Fahrantriebs und/oder des mindestens einen Arbeitsorgans der selbstfahrenden Arbeitsmaschine auf.

Typischerweise können die Arbeitsorgane der Arbeitsmaschine mittels des Steuersystems basierend auf einer Ernteprozessstrategie angesteuert werden. Die Ernteprozessstrategie umfasst dabei eine Zielvorgabe der Einstellung oder der Optimierung von Ernteprozessparametern. Die Umsetzung der Ernteprozessstrategie kann dabei jeweils durch eine entsprechende Vorgabe von Maschinenparametern der Arbeitsorgane durch das Steuersystem erfolgen. In Abhängigkeit von der Ausgestaltung des Steuersystems kann es möglich sein, die jeweilige Ernteprozessstrategie aus einer Anzahl vorbestimmter Ernteprozessstrategien auszuwählen und/oder eine Parametrierung der jeweiligen Ernteprozessstrategie benutzerdefiniert vorzunehmen.

Um die Maschinenparameter und/oder die Ernteprozessstrategie anzeigen und auswählen zu können, weist die landwirtschaftliche Arbeitsmaschine in aller Regel auch eine Anzeigevorrichtung auf, welche mindestens eine Vorfeldinformation des geografischen Vorfelds der Arbeitsmaschine anzeigt. Auf Basis der angezeigten Vorfeldinformation kann eine optimale Auswahl des Maschinenparameters und/oder einer Ernteprozessstrategie erfolgen.

Als problematisch bei bekannten Anzeigevorrichtungen hat sich jedoch herausgestellt, dass eine Anzeige einer einzigen Vorfeldinformation nicht ausreichend ist.

Der vorliegenden Anmeldung liegt die Aufgabe zugrunde, eine Anzeigevorrichtung bereitzustellen, die eine übersichtliche Darstellung verschiedener Vorfeldinformationen ermöglicht, um einem Benutzer der landwirtschaftlichen Arbeitsmaschine die Auswahl eines Maschinenparameters zu vereinfachen.

Die zugrunde liegende Aufgabe wird erfindungsgemäß mittels der Anzeigevorrichtung mit den Merkmalen des Anspruchs 1 gelöst. Vorteilhafte Ausgestaltungen ergeben sich aus den zugehörigen Unteransprüchen.

Die Anzeigevorrichtung ist dazu eingerichtet und geeignet, eine Ist-Vorfeldinformation sowie eine prognostizierte Vorfeldinformation eines geografischen Vorfelds der landwirtschaftlichen Arbeitsmaschine anzuzeigen.

Als "Ist-Vorfeldinformation" wird im Sinne der vorliegenden Erfindung eine Vorfeldinformation verstanden, die live, d.h. in Echtzeit, während des Ernteprozesses zu dem abzuerntenden Feld erfasst wird. Hierzu kann die Arbeitsmaschine mindestens einen Sensor aufweisen. Beispielsweise kann es sich um einen Korntanksensor oder einen Bestandsdichtesensor handeln. Bei der Ist-Vorfeldinformation handelt es sich mithin um eine Information hinsichtlich der tatsächlich von der Arbeitsmaschine bei dem Ernteprozess zu beachtenden Gegebenheiten.

Als "prognostizierte Vorfeldinformation" wird im Sinne der vorliegenden Erfindung eine Vorfeldinformation verstanden, die im Voraus, d.h. vorausschauend, ermittelt wurde. Hierbei handelt es sich um eine Information, die voraussichtlich der der Arbeitsmaschine zur Verfügung stehende Gegebenheiten beschreibt.

Die Anzeige der beiden vorgenannten Vorfeldinformationen hat den Vorteil, dass ein Benutzer der Arbeitsmaschine Informationen darüber erhält, inwieweit die prognostizierten Informationen mit den tatsächlich vorliegenden Gegebenheiten übereinstimmen. Auf diese Weise wird es dem Benutzer ermöglicht, eine Ansteuerung der Arbeitsmaschine händisch anzupassen, sofern eine große Abweichung zwischen der prognostizierten und der Ist-Vorfeldinformation festgestellt werden kann, da diese ein Indiz dafür geben kann, wie verlässlich die prognostizierten Vorfeldinformationen für einen nächsten, zu überfahrenden Abschnitt des abzuerntenden Felds sind.

Dabei kann vorzugsweise vorgesehen sein, dass die landwirtschaftliche Arbeitsmaschine ein Vorfelderfassungssystem aufweist, mittels dem Informationen hinsichtlich des geografischen Vorfelds der Arbeitsmaschine erfassbar sind. Dem Vorfelderfassungssystem kann dabei mindestens ein Sensor zugeordnet sein, welcher beispielsweise an der landwirtschaftlichen Arbeitsmaschine angeordnet sein kann. Die Erfassung des geografischen Vorfelds kann dabei vorzugsweise wie folgt erfolgen:

In einem ersten Schritt wird eine erste prognostizierte Vorfeldinformation des geografischen Vorfelds bestimmt. Hierzu wird der mindestens eine Sensor des Vorfelderfassungssystems genutzt. Der Sensor kann dabei vorzugsweise frontseitig an der selbstfahrenden landwirtschaftlichen Arbeitsmaschine, insbesondere frontseitig an einer Fahrerkabine der Arbeitsmaschine, angeordnet sein. Vorzugsweise kann allerdings auch vorgesehen sein, dass das Vorfelderfassungssystem eine Mehrzahl von Sensoren umfasst, um das geografische Vorfeld der Arbeitsmaschine zu scannen.

In einem zweiten Schritt wird die erfasste erste prognostizierte Vorfeldinformation an ein Steuersystem der selbstfahrenden Arbeitsmaschine übermittelt. Hierbei kann vorzugsweise vorgesehen sein, dass das Steuersystem neben einer Recheneinheit auch einen Speicher zur zumindest vorübergehenden Speicherung der von dem Vorfelderfassungssystem erfassten Informationen aufweist, sodass die Vorfeldinformation zunächst an den Speicher übermittelt wird, bevor sie von der Recheneinheit abgerufen wird. Ebenso kann vorgesehen sein, dass die Vorfeldinformation unmittelbar an die Recheneinheit des Steuersystems übermittelt wird.

In einem dritten Schritt wird eine zweite prognostizierte Vorfeldinformation an das Steuersystem übermittelt. Bei der zweiten prognostizierten Vorfeldinformation handelt es sich um eine Information, die aus einer Biomasseprognosekarte entnommen wurde. Bei der Biomasseprognosekarte handelt es sich um eine Karte mit Informationen zu der voraussichtlich zur Verfügung stehenden, von der Arbeitsmaschine aufzunehmenden Biomasse. Als "Biomasse" wird im Sinne der vorliegenden Erfindung die bei dem Ernteprozess zur Verfügung stehende abzuerntende Menge an Erntegut verstanden. Hierzu zählen insbesondere auf dem Feld aufstehende, abzuerntende Pflanzen. Neben der Biomasse kann die Biomasseprognosekarte jedoch weitere auch Informationen betreffend das abzuerntende Feld, insbesondere eine Abreife des Feldbestands sowie einzelne Feldzonen, enthalten.

Die Biomasseprognosekarte ist dabei zumindest zum Teil offline, also zeitlich versetzt zu dem jeweils laufenden Ernteprozess, erzeugt worden. Bei der von dem Sensor erfassten Information handelt es sich hingegen um georeferenzierte Informationen zu dem in Rede stehenden Feld, die online an der Arbeitsmaschine erzeugt werden.

Die Biomasseprognosekarte kann insbesondere auch GPS-basiert sein, d.h. in Abhängigkeit eines Aufenthaltsorts der landwirtschaftlichen Arbeitsmaschine, Informationen betreffend das geografische Vorfeld der landwirtschaftlichen Arbeitsmaschine bereitstellen.

Die Biomasseprognosekarte kann dabei auf Basis von verschiedenen Informationen erzeugt worden sein. Zur Erstellung der Biomasseprognosekarte können Wachstumsmodelle und statistische Modelle, insbesondere unter Verwendung von künstlicher Intelligenz, verwendet werden. Darüber hinaus können Indizes und Kanäle genutzt werden. Die Biomasseprognosekarte erhält dabei für eine Vielzahl von Bezugspunkten auf dem abzuerntenden Feld Informationen zu einem voraussichtlichen Bestand des abzuerntenden Felds. Insbesondere kann vorgesehen sein, dass die Biomasseprognosekarte aus einer matrixartigen Anordnung von Pixeln gebildet ist, wobei jedem Pixel eine oder mehrere Informationenbetreffend das abzuerntende Feld zugeordnet sind.

Auch kann vorgesehen sein, dass die Biomasseprognosekarte auf Satellitenbildern des abzuerntenden Felds basiert. Dabei kann vorzugsweise vorgesehen sein, dass eine Positionskorrektur der aufgenommenen Satellitenbilder erfolgt, bevor diese zur Erstellung der Biomasseprognosekarte herangezogen werden. Auch ist denkbar, dass Bilder verschiedener Satelliten genutzt werden, um eine Genauigkeit der Satellitenbilder zu verbessern.

Vorzugsweise kann vorgesehen sein, dass die Satellitenbilder des abzuerntenden Felds in einem Wellenlängenbereich von etwa 380 nm bis 3000 nm, vorzugsweise von etwa 400 nm bis 900 nm, aufgenommen werden. Weiterhin kann es bevorzugt sein, wenn der jeweilige Satellit mehrere Spektralbänder detektiert, vorzugsweise 5 bis 15 Spektralbänder.

Vorzugsweise kann weiter vorgesehen sein, dass eine räumliche Auflösung jedes Satellitenbilds in einem Bereich von 2 m bis 20 m, vorzugsweise 3 m bis 10 m, liegt. Ebenso kann jedoch auch vorgesehen sein, Satellitenbilder mit einer kleineren Auflösung, vorzugsweise im Bereich von 0,3 m bis 2 m, zu wählen, welche jedoch in aller Regel vergleichsweise hohen Beschaffungskosten unterliegen. Auch kann vorgesehen sein, dass das Satellitenbild des abzuerntenden Felds in zeitlichen Abständen von Stunden bis zu mehreren Tagen wiederholt aufgenommen wird, um die hieraus abgeleitete Biomasseprognosekarte kontinuierlich anpassen zu können.

Beispielhaft können die unter der Raumfahrtmission Sentinel-2 zusammengefassten Satelliten, Sentinel-2A und Sentinel-2B, als Satelliten zur Erstellung der Satellitenbilder herangezogen werden. Bei diesen Satelliten handelt es sich um ein Paar optischer Erdbeobachtungssatelliten in einem sonnensynchronen Erdorbit. Alternativ oder zusätzlich können auch Satellitenbilder von Zusammenschlüssen von Satelliten genutzt werden, beispielhaft des Zusammenschlusses "PlanetScope". Insbesondere für den Fall, dass Schwankungen bei der Bestimmung des Bestands auftreten, kann das Hinzuziehen von Satellitenbildern verschiedener Satelliten besonders bevorzugt sein.

Auch kann vorgesehen sein, dass die Biomasseprognosekarte in Abhängigkeit einer Reflexion des Sonnenlichts der auf dem Feld befindlichen Pflanzen bestimmt wird, wobei hierzu ein normierter differenzierter Vegetationsindex (NDVI) bestimmt wird. Der normierte differenzierte Vegetationsindex sieht vor, dass ein Teil des an den auf dem abzuerntenden Feld aufstehenden Pflanzen reflektierten Teils des Sonnenlichts gemessen wird, insbesondere im Infrarot-Bereich des Spektrums, welcher bei einer Wellenlänge von 780 nm beginnt. Vorzugsweise kann dabei vorgesehen sein, lediglich im Nahen Infrarot-Bereich (NIR) zu messen, d.h. bis zu einer Wellenlänge von 2500 nm. Zugleich kann die Reflexion des Teils des Sonnenlichts gemessen werden, welcher im roten, sichtbaren Bereich liegt, welcher in etwa einem Wellenlängenbereich von 625 nm bis 780 nm entspricht.

Der vorgenannte normierte differenzierte Vegetationsindex (NDVI) lässt sich sodann wie folgt bestimmen: $NDVI = \frac{NIR - Rot}{NIR + Rot}$

Dabei stellt "NIR" den im Infrarot-Bereich gemessenen Wert der Reflexion dar, während "Rot" den Wert des im roten, sichtbaren Teil des Spektrums gemessenen Teil des Sonnenlichts darstellt.

Die gemessenen Werte lassen sich schließlich in eine Biomasseprognosekarte umwandeln, wobei ein hoher Wert des NDVI auf eine hohe photosynthetische Aktivität schließen lässt, während ein niedriger Wert des NDVI auf eine niedrige photosynthetische Aktivität schließen lässt, welche wiederum auf kranke oder tote Vegetation, auf Steine oder auf Ackerboden hinweist. Die mittels Werte des normierten differenzierten Vegetationsindex erzeugte Biomasseprognosekarte gibt mithin einen zuverlässigen Überblick über die zur Verfügung stehende Biomasse.

Vorzugsweise kann es sich bei der zweiten prognostizierten Vorfeldinformation um einen Wert des Vegetationsindex handeln. Mithin kann vorgesehen sein, dass neben der mittels des Sensors bestimmten ersten prognostizierten Vorfeldinformation der landwirtschaftlichen Arbeitsmaschine ein Wert des NDVI, der ein Maß für die photosynthetische Aktivität darstellt, bei der Bestimmung des Maschinenparameters herangezogen wird. Eine Kombination dieser beiden Vorfeldinformationen hat sich als besonders vorteilhaft erwiesen.

Vorzugsweise kann es sich bei der zweiten prognostizierten Vorfeldinformation um einen gewichteten Mittelwert eines Segments des Vorfelds des Vegetationsindex handeln. Beispielhaft ist vorstellbar, dass der Vegetationsindex für einen relevanten Messbereich, auch "region of interest" genannt, bestimmt wird. Der relevante Messbereich kann wiederum in eine Vielzahl von Segmenten unterteilt werden. Vorzugsweise liegt der relevante Messbereich in dem Vorfeld der landwirtschaftlichen Arbeitsmaschine.

Dabei kann vorgesehen sein, dass der Vegetationsindex als gewichteter Mittelwert für mehrere relevante Messbereiche bestimmt wird, wobei sich die relevanten Messbereiche als streifenartige Bereiche einstellen. Beispielhaft kann vorgesehen sein, dass drei, in verschiedenen Abständen von einem Messerbalken der Arbeitsmaschine angeordnete relevante Messbereiche herangezogen werden, die jeweils in mehrere Segmente unterteilt worden. Ein Segment ist dabei größer als eine Auflösung des zugehörigen Satellitenbilds, sodass für jedes Segment eine gewichtete Mittelung des entsprechenden Vegetationsindex erfolgen kann.

Bei der ersten prognostizierte als auch bei der zweiten prognostizierte Vorfeldinformation handelt es sich um prognostizierte, d.h. geschätzte, Vorfeldinformationen. Zur Bestimmung der Ist-Vorfeldinformationen kann hingegen mindestens ein weiterer Sensor vorgesehen sein. Bei dem Sensor kann es sich beispielhaft um einen Korntanksensor oder einen Bestandsdichtesensor handeln, welcher jeweils live, d.h. in Echtzeit, während des Ernteprozesses Ist-Informationen zu dem abzuerntenden Feld erfasst.

In einem letzten Schritt werden zumindest die erste prognostizierte und die zweite prognostizierte Vorfeldinformation mittels der Recheneinheit zu mindestens einem Maschinenparameter zur Ansteuerung eines Fahrantriebs und/oder eines Arbeitsorgans der selbstfahrenden Arbeitsmaschine verarbeitet. Neben der ersten prognostizierten und der zweiten prognostizierten Vorfeldinformationen können dabei auch weitere Informationen betreffend das Vorfeld der selbstfahrenden Arbeitsmaschine bei der Bestimmung des Maschinenparameters herangezogen werden. Auch kann vorgesehen sein, dass mehrere Maschinenparameter bestimmt werden. Beispielsweise ist denkbar, dass jeweils ein Maschinenparameter für jedes der Arbeitsorgane und auch ein Maschinenparameter für den Fahrantrieb bestimmt werden.

Der mittels der Recheneinheit ermittelte Maschinenparameter kann schließlich an eine Regeleinrichtung des Steuersystems übergeben werden, welche sodann eine Ansteuerung der landwirtschaftlichen Arbeitsmaschine vornimmt. So ist denkbar, dass der Maschinenparameter den Fahrantrieb betrifft. Die Regeleinrichtung übermittelt in diesem Fall eine Soll-Geschwindigkeit an eine Fahrgeschwindigkeitssteuerung, die den Fahrantrieb ansteuert und einen Vortrieb der landwirtschaftlichen Arbeitsmaschine mit der ermittelten Fahrgeschwindigkeit bewirkt.

Dabei kann ferner vorzugsweise vorgesehen sein, dass der Maschinenparameter in Abhängigkeit eines von der Recheneinheit zumindest auf Basis der ersten prognostizierten und der zweiten prognostizierte Vorfeldinformation ermittelten Erntegutdurchsatzes bestimmt wird. Es kann mithin vorgesehen sein, dass mittels der ersten prognostizierte und zweiten prognostizierte Vorfeldinformation zunächst ein zu erwartender Erntegutdurchsatz bestimmt wird, bevor auf Basis des ermittelten Erntegutdurchsatzes der Maschinenparameter für den Fahrantrieb und/oder die Arbeitsorgane bestimmt wird. Bei dem Erntegutdurchsatz handelt es sich um einen Schätzwert, der zumindest auf Basis der ersten prognostizierten und der zweiten prognostizierten Vorfeldinformation generiert wird.

Das Verfahren zur Erfassung des geografischen Vorfelds geht auf die Überlegung zurück, dass die Ermittlung mindestens eines Maschinenparameters für die selbstfahrende landwirtschaftliche Arbeitsmaschine auf einer Verknüpfung von prognostizierten Informationen zum abzuerntenden Feld mit Informationen zum Feld zum Zeitpunkt des Erntevorgangs erfolgen kann. Damit ist einerseits eine Prognose einer Soll-Fahrgeschwindigkeit für die landwirtschaftliche Arbeitsmaschine und andererseits eine Orientierung der Soll-Fahrgeschwindigkeit auf die tatsächlichen Gegebenheiten möglich. Bei der Soll-Fahrgeschwindigkeit handelt es sich um die Fahrgeschwindigkeit, die der Fahrgeschwindigkeitssteuerung der landwirtschaftlichen Arbeitsmaschine vorgegeben wird. Die Fahrgeschwindigkeitssteuerung ist dabei in der Lage, den Fahrantrieb der landwirtschaftlichen Arbeitsmaschine zu steuern. Es kann aber auch eine manuelle Einstellung der Soll-Fahrgeschwindigkeit durch einen Bediener der selbstfahrenden landwirtschaftlichen Arbeitsmaschine vorgesehen sein. Hierfür kann eine Ein-/Ausgabeeinheit vorgesehen sein, über welche die ermittelte Soll-Fahrgeschwindigkeit zur Einstellung durch den Bediener angezeigt wird.

Die Anzeigevorrichtung ermöglicht somit es somit, den Benutzer der Arbeitsmaschine darüber zu informieren, welche Vorfeldinformationen in welchem Umfang bei der Ermittlung des Erntegutdurchsatzes, der darauf basierenden Berechnung des Maschinenparameters und der Ansteuerung der Arbeitsmaschine berücksichtigt werden. Auf diese Weise kann es dem Benutzer vereinfacht ermöglicht werden, händisch in den Ansteuerprozess einzugreifen, sofern dies gewünscht ist.

Vorteilhafter Weise ist denkbar, dass die Anzeigevorrichtung digital ausgebildet ist und verschiedene Ansichten ermöglicht. Vorzugsweise kann vorgesehen sein, dass eine Ansicht der Anzeigevorrichtung veränderbar ist. So ist denkbar, dass der Benutzer der landwirtschaftlichen Arbeitsmaschine in einer Ansicht virtuell über das abzuerntende Feld geführt wird. In einer anderen Ansicht kann lediglich ein Lenksystem der Arbeitsmaschine gezeigt sein. Eine wiederum andere Ansicht kann die Anzeige in einem der Anzeigevorrichtung zugeordneten Head-up-Display vorsehen, sodass ein Herunterblicken auf das Tachometer der landwirtschaftlichen Arbeitsmaschine nicht nötig ist. Ebenso kann eine Vogelperspektive gewünscht sein, in der vorzugsweise die Arbeitsmaschine gezeigt ist.

Ebenso kann weiter vorgesehen sein, dass das Vorfelderfassungssystem eine dritte prognostizierte Vorfeldinformation erfasst, wobei die dritte prognostizierte Vorfeldinformation ebenfalls bei der Bestimmung des Maschinenparameters berücksichtigt und von der Anzeigevorrichtung anzeigbar wird. Die dritte prognostizierte Vorfeldinformation kann dabei ebenfalls mittels des Sensors des Vorfelderfassungssystem erfasst werden. Ebenso kann jedoch auch vorgesehen sein, dass die dritte prognostizierte Vorfeldinformation einer anderen Quelle entstammt, beispielsweise einer Topologiekarte des abzuerntenden Felds.

Bei der dritten prognostizierten Vorfeldinformation kann es sich - analog zu der ersten prognostizierten Vorfeldinformation - um die Bestandsdichte, die Schnitthöhe, die Bestandshöhe und/oder die Teilbreite des geografischen Vorfelds der Arbeitsmaschine handeln.

Eine vorzugsweise Ausgestaltung der Erfindung sieht ferner vor, dass die Anzeigevorrichtung konzentrisch angeordnete Anzeigeelemente in Form von Kreisringausschnitten aufweist, wobei die Ist-Vorfeldinformation einem ersten Kreisringausschnitt zugeordnet ist, während die prognostizierte Vorfeldinformation einem zweiten Kreisringausschnitt zugeordnet ist. Die Darstellung der Vorfeldinformationen in Kreisringausschnitten ermöglicht eine besonders übersichtliche Form der Darstellung. Auf diese Weise werden dem Benutzer der Anzeigevorrichtung in besonders vorteilhafter Weise alle relevanten Vorfeldinformationen auf einen Blick aufgezeigt. Da die Kreisringausschnitte konzentrisch angeordnet sind, ist ein Vergleich der prognostizierten Vorfeldinformation mit den Ist-Vorfeldinformation besonders einfach und schnell möglich.

Dabei ist gemäß einer vorzugsweisen Ausgestaltung der Erfindung vorgesehen, dass eine Größe einer Anzeigefläche eines jeweiligen Anzeigeelements dynamisch an einen zu visualisierenden Wert der Ist-Vorfeldinformation bzw. der prognostizierten Vorfeldinformation anpassbar ist. Dabei kann insbesondere vorgesehen sein, dass- sofern das Anzeigeelement in Form eines Kreisringausschnitts ausgebildet ist - eine Länge des Kreisringausschnitts mit dem Wert der jeweiligen Vorfeldinformation skaliert, d.h. sich in Abhängigkeit des Werts vergrößert oder verringert.

Gemäß einer vorteilhaften Ausgestaltung der Erfindung ist vorgesehen, dass die Anzeigevorrichtung eine Zentralanzeige aufweist, welche konzentrisch innerhalb der Anzeigeelemente angeordnet ist. Vorzugsweise kann hierbei vorgesehen sein, dass die Zentralanzeige eine momentan abzurufende Vorfeldinformation anzeigt. Die konzentrisch um die Zentralanzeige angeordneten Anzeigeelemente beziehen sich sodann auf einen Wert des prognostizierten Vorfeldinformation bzw. der Ist-Vorfeldinformation. Auf diese Weise hat der Benutzer der Anzeigevorrichtung einen besonders guten Überblick über die jeweilig abgerufene Vorfeldinformation.

Gemäß einer weiteren vorzugsweisen Ausgestaltung der Erfindung ist vorgesehen, dass es sich bei der anzuzeigenden Vorfeldinformation um eine Schichthöhe, eine Bestandsdichte, eine Schnitthöhe, eine Bestandshöhe, einen Biomasseertrag, eine Abreife eines Bestands, eine Befahrbarkeit, eine Lagerklassierung, eine Feldzone oder eine Teilbreite des geografischen Vorfelds der Arbeitsmaschine handelt, wobei vorzugsweise von jeder der vorgenannten Vorfeldinformationen ein prognostizierter Wert sowie in Ist-Wert angezeigt werden kann. In Versuchen hat sich herausgestellt, dass die vorstehend genannten Vorfeldinformationen besonders wichtig bei einer Steuerung der landwirtschaftlichen Arbeitsmaschine über das abzuerntende Feld sind.

Die aktuelle "Schnitthöhe" ist dabei typischerweise - sofern die Arbeitsmaschine als Mähdrehscher ausgebildet ist - abhängig von einem Arbeitspunkt eines Schneidwerks der Arbeitsmaschine. Darüber hinaus hängt die Schnitthöhe von einer eingestellten Stoppelhöhe ab.

Im Sinne der vorliegenden Erfindung wird unter einer "aktuellen Teilbreite" eine tatsächliche Auslastung einer Arbeitsbreite eines Vorsatzgeräts der selbstfahrenden Arbeitsmaschine verstanden, wobei unter einer "Arbeitsbreite" wiederum eine zu einem bestimmten Zeitraum während des Ernteprozesses genutzte Breite des Vorsatzgeräts verstanden wird. Als "Arbeitsbreite" kann mit anderen Worten die gesamte zur Bearbeitung des abzuerntenden Felds zur Verfügung stehende Breite des Vorsatzgeräts verstanden werden. Beispielsweise kann vorgesehen sein, dass die Arbeitsmaschine das Feld abfährt, wobei eine Breite des abzuerntenden Abschnitts des Felds eine Arbeitsbreite des Vorsatzgeräts unterschreitet, sodass eine Bearbeitung des Felds - bei Nutzung der gesamten Breite des Vorsatzgeräts - eine Bearbeitung eines nicht zum abzuerntenden Feld gehörenden Teils zur Folge hätte. In einem solchen Fall wird lediglich ein "Teil" der Arbeitsbreite des Vorsatzgeräts genutzt, dieser Teil wird im Sinne der vorliegenden Erfindung als "aktuelle Teilbreite" bezeichnet.

Daneben ist auch vorstellbar, dass die Bestandhöhe des abzuerntenden Felds nicht mittels des Sensors bestimmt wird, sondern durch eine dem Steuersystem zugeführte Höhendifferenzkarte oder eine Topologiekarte bestimmt wird. Die Höhendifferenzkarte kann dabei auf Informationen basieren, die mittels einer Drohne, eines Flugzeugs oder eines Satellits ermittelt wurden.

In Bezug auf das Verfahren zur Ermittlung des Maschinenparameters kann weiterhin vorgesehen sein, dass der Erntegutdurchsatz in Abhängigkeit der ersten prognostizierten, der zweiten prognostizierten und der weiteren dritten prognostizierten Vorfeldinformation bestimmt wird. Bei der ersten prognostizierte Vorfeldinformation handelt es sich in diesem Fall um eine aktuelle Teilbreite des geografischen Vorfelds. Bei der zweiten prognostizierte Vorfeldinformation handelt es sich um eine Information aus der Biomasseprognosekarte. Bei der dritten prognostizierte Vorfeldinformation handelt es sich in diesem Fall um eine aktuelle Schnitthöhe des geografischen Vorfelds. Die Berücksichtigung der vorgenannten Vorfeldinformationen führt zu einer verbesserten Bestimmung des Erntegutdurchsatzes und somit zu einer verbesserten Bestimmung des Maschinenparameters.

Sofern es sich bei der anzuzeigenden Vorfeldinformation um eine Schichthöhe handelt, kann vorgesehen sein, dass das Vorfelderfassungssystem hierzu eine Schichthöhenwalze zur Bestimmung der Schichthöhe aufweist. Für eine mögliche Ausgestaltung der Schichthöhenwalze wird auf die deutsche Patentanmeldung DE 10 2019 116 452 A1 hingewiesen, dessen Inhalt betreffend die Ausgestaltung einer Schichthöhenwalze, dort "Durchsatzmessvorrichtung" genannt, hiermit durch Verweis vollumfänglich dem Inhalt der vorliegenden Anmeldung hinzugefügt wird.

Eine vorteilhafte Ausgestaltung der Erfindung sieht vor, dass die Anzeigevorrichtung eine Eingabeeinrichtung zum Festlegen eines Zielwerts eines Maschinenparameters für ein Arbeitsorgan der landwirtschaftlichen Arbeitsmaschine und/oder die Arbeitsmaschine selbst durch den Benutzer der landwirtschaftlichen Arbeitsmaschine umfasst. Mittels der Eingabe lässt sich mithin der Maschinenparameter eingeben. Dieser kann in Abhängigkeit von der von der Anzeigevorrichtungen angezeigten Vorfeldinformationen bestimmt werden. Vorzugsweise kann jedoch auch vorgesehen sein, dass die Steuerung der Arbeitsorgans sowie der Arbeitsmaschine automatisch, d.h. ohne händisches Zutun, erfolgt. So kann vorgesehen sein, dass die Arbeitsorgane der Arbeitsmaschine mittels eines Steuersystems basierend auf einer Ernteprozessstrategie angesteuert werden. Die Ernteprozessstrategie umfasst dabei eine Zielvorgabe der Einstellung oder der Optimierung von Ernteprozessparametern. Die Umsetzung der Ernteprozessstrategie kann dabei jeweils durch eine entsprechende Vorgabe von Maschinenparametern der Arbeitsorgane durch das Steuersystem erfolgen. In Abhängigkeit von der Ausgestaltung des Steuersystems kann es möglich sein, die jeweilige Ernteprozessstrategie aus einer Anzahl vorbestimmter Ernteprozessstrategien auszuwählen und/oder eine Parametrierung der jeweiligen Ernteprozessstrategie benutzerdefiniert vorzunehmen. Hierzu kann die Eingabeeinrichtung genutzt werden.

Eine besonders vorteilhafte Weiterentwicklung der erfindungsgemäßen Anzeigevorrichtung sieht vor, dass die Anzeigevorrichtung mit einem Vorfelderfassungssystem der landwirtschaftlichen Arbeitsmaschine verbindbar und eingerichtet ist, die von dem Vorfelderfassungssystem erfasste Vorfeldinformation laufend zu aktualisieren. Das Vorfelderfassungssystem umfasst dabei vorzugsweise mindestens einen an der selbstfahrenden Arbeitsmaschine angeordneten Sensor. Die von dem Sensor erfasste Information kann zahlreiche unterschiedliche Aspekte des Vorfelds der Arbeitsmaschine betreffen. Hierunterfallen beispielsweise eine Information betreffend einen Abschnitt des abzuerntenden Felds, eine Information betreffend die geometrischen Verhältnisse des abzuerntenden Feldes oder eine Information betreffend eine Umgebung des abzuerntenden Felds.

Dabei kann vorgesehen sein, dass der Sensor als LiDAR-Sensor ausgebildet ist. Als LiDAR -Sensor wird ein Sensor verstanden, der mittels einer Aussendung von Lichtwellen Abstände und Geschwindigkeiten von Zielobjekten bestimmen kann. Er arbeitet mithin nach demselben Prinzip wie ein Radar, unterscheidet sich jedoch in der Frequenz der ausgesandten Lichtwellen. Mittels eines LiDAR-Sensors lassen sich Information betreffend das geogerafische Vorfeld der landwirtschaftlichen Arbeitsmaschine, insbesondere die Teilbreite sowie die Bestandshöhe des abzuerntenden Felds, zuverlässig bestimmen. Mittels des LiDAR-Sensors lässt sich jedoch auch ein Anteil an Lagergetreide, d.h. umgeknicktes Getreide, dessen Ernte erschwert ist, erkennen.

Auch kann der Sensor vorzugsweise als Kamera, vorzugsweise als Stereo-Kamera, ausgebildet sein. Die Kamera kann dabei vorzugsweise an einer Fahrerkabine der landwirtschaftlichen Arbeitsmaschine angeordnet sein. Die Kamera kann dazu genutzt werden, die Bestandshöhe, die Bestandsdichte, die Teilbreite, den Anteil an Lagergetreide, Unkraut sowie einen Grad der Abreife des abzuerntenden Felds zu erkennen und diese Informationen als Vorfeldinformationen an das Steuersystem zu übermitteln.

Gemäß einer vorteilhaften Ausgestaltung der Erfindung ist vorgesehen, dass das Vorfelderfassungssystem zwei Sensoren aufweist, wobei ein erster Sensor als LiDAR-Sensor ausgebildet ist, während ein zweiter Sensor als Kamera ausgebildet ist, wobei der erste Sensor die erste prognostizierte Vorfeldinformation erfasst, während der zweite Sensor die dritte prognostizierte Vorfeldinformation erfasst. In Versuchen hat sich herausgestellt, dass eine Kombination der zwei vorgenannten Sensoren besonders dazu geeignet ist, das geografische Vorfeld der landwirtschaftlichen Arbeitsmaschine in besonders zuverlässiger Weise zu bestimmen. Jeder der Sensoren erfasst dabei eine Vorfeldinformation betreffend das geografische Vorfeld der landwirtschaftlichen Arbeitsmaschine und übermittelt diese vorzugsweise an das Steuersystem, welches die beiden Vorfeldinformationen zusammen mit der zweiten prognostizierten Vorfeldinformation zu einem Maschinenparameter verarbeitet.

Die eingangs genannte Aufgabe wird ferner durch eine selbstfahrende landwirtschaftliche Arbeitsmaschine gemäß Anspruch 8 gelöst. Eine vorteilhafte Ausgestaltung ergibt sich aus dem zugehörigen Unteranspruch. Die in Bezug auf die Anzeigevorrichtung genannten Vorteil gelten dabei ebenfalls für die Arbeitsmaschine. Die erfindungsgemäße selbstfahrende landwirtschaftliche Arbeitsmaschine kann als selbstfahrender Feldhäcksler oder als selbstfahrender Mähdrescher für den landwirtschaftlichen Einsatz auf einem landwirtschaftlichen Feld ausgebildet sein.

Die Erfindung ist nachstehend anhand eines Ausführungsbeispiels, das in den Figuren dargestellt ist, näher erläutert. Es zeigt:
- Fig. 1:: Eine erfindungsgemäße Arbeitsmaschine.
- Fig. 2:: Eine erfindungsgemäße Anzeigevorrichtung der Arbeitsmaschine aus Figur 1.

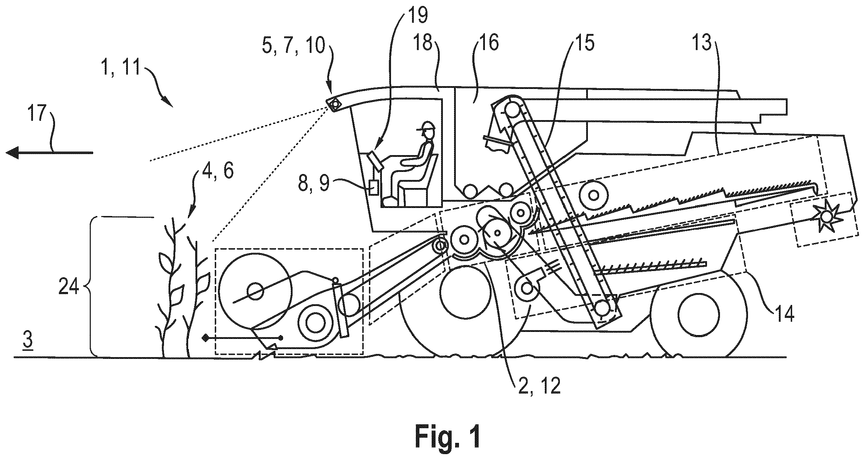

Eine erfindungsgemäße selbstfahrende landwirtschaftliche Arbeitsmaschine **1** ist in der **Figur 1** gezeigt. Die Arbeitsmaschine **1** ist in Form eines Mähdrehschers **11** ausgebildet. Der selbstfahrende Mähdrescher **11** weist mehrere Arbeitsorgane **2** zum Aufnehmen, Bearbeiten und Weiterleiten von Erntegut **4** eines abzuerntenden Felds **3** auf.

So weist der Mähdrescher **11** ein Dreschwerk **12** zum Dreschen von aufgenommenem Erntegut **4** zu Korngut auf. Unter dem Erntegut **4** ist dabei das gesamte vom abzuerntenden Feld **3** aufgenommene und dem Dreschwerk **12** zugeführte Material zu verstehen, wobei das Korngut dann die von dem Mähdrescher **11** aus dem Erntegut **4** zu gewinnenden Körner bezeichnet.

Grundsätzlich dient das Dreschwerk **12** zum Ausreiben des überwiegenden Teils des Kornguts aus dem Stroh des Ernteguts **4** durch den Dreschvorgang. In dem als Abscheideanordnung **13** ausgestalteten Arbeitsorgan **2** wird dann das Erntegut **4** mit dem in ihm verbliebenen Kornanteil so bewegt, z.B. geschüttelt, dass auch das verbliebene Korngut möglichst aus dem Stroh und dem sonstigen Erntegut **4** herausgetrennt wird. Das im Dreschwerk **12** und der Abscheideanordnung **13** gewonnene Korngut wird dann dem als Reinigungsanordnung **14** ausgestalteten Arbeitsorgan **2** zugeführt. In der Reinigungsanordnung **14,** welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung **15,** z.B. einem Kornelevator, in einen Korntank **16.** Das ausgedroschene Stroh - also das verbliebene Erntegut **4** in der Abscheideanordnung **13** - wird von dem Mähdrescher **11** abgelegt, z.B. als Schwad entlang einer Fahrspur des Mähdreschers **11.**

Die vorgenannten Arbeitsorgane **2** werden über einen nicht in den Figuren gezeigten Fahrantrieb in Form eines Verbrennungsmotors antriebstechnisch versorgt. Dieser Verbrennungsmotor ist neben dem Antrieb der Arbeitsorgane **2** zum Vortrieb der selbstfahrenden landwirtschaftlichen Arbeitsmaschine **1** mit einer Fahrgeschwindigkeit in Richtung einer Fahrtrichtung **17** entlang des abzuerntenden Felds **3** ausgebildet. Der Verbrennungsmotor kann mittels wenigstens einer und/oder mehreren Kopplungsvorrichtungen mit den Arbeitsorgangen zum Antrieb gekoppelt sein.

Die obigen Arbeitsorgane **2** können jeweils durch die Vorgabe verschiedener Maschinenparameter angesteuert werden. Ein obiges Dreschwerk **12** kann beispielsweise durch die Vorgabe verschiedener Dreschwerksparameterparameter angesteuert werden. Hierunter fallen in Abhängigkeit vom Aufbau des Dreschwerks **12** Antriebsparameter wie beispielsweise eine Trommeldrehzahl oder sonstige Bewegungskennzahlen der Dreschtrommel sowie eine Korbweite - also der Abstand zwischen der Dreschtrommel und einem Dreschkorb. Sofern das Dreschwerk **12** Entgrannerklappen aufweist, können auch diese im Rahmen der Ansteuerung des Dreschwerks **12** verstellt werden.

Es ist weiter ein Vorfelderfassungssystem **5** zur Erfassung von Informationen hinsichtlich eines geografischen Vorfelds **6** des selbstfahrenden Mähdreschers **11** vorgesehen. Das Vorfeld **6** des Mähdreschers **11** ist in einem vorwärtigen Bereich des Mähdreschers **11** gelegen. Das Vorfelderfassungssystem **5** weist wiederum einen Sensor **7** auf, der frontseitig an einer Fahrerkabine **18** des Mähdreschers **11** angeordnet ist. Der Sensor **7** ist in Form eines LiDAR-Sensor **10** ausgebildet und dazu vorgesehen, Informationen betreffend das geografische Vorfeld **6** des Mähdreschers **11** zu ermitteln. Der LiDAR-Sensor **10** ermittelt dabei die Bestandshöhe **24** sowie die Teilbreite des abzuerntenden Felds **3.** Bei den von dem LiDAR-Sensor **10** ermittelten Vorfeldinformationen handelt es sich um prognostizierte Vorfeldinformationen.

Darüber hinaus weist der Mähdrescher **11** ein Steuersystem **8** auf, welches wiederum mit einer Recheneinheit **9** versehen ist. Die Recheneinheit **9** ist dabei dazu vorgesehen und eingerichtet, die von dem Vorfelderfassungssystem **5** erfassten Informationen zu einem Maschinenparameter zu verarbeiten. Bei dem Maschinenparameter handelt es sich im vorliegenden Fall um eine Fahrgeschwindigkeit, mithin um einen Parameter zur Ansteuerung des Fahrantriebs des Mähdreschers **11.** Dem Steuersystem **8** ist darüber hinaus eine nicht in den Figuren dargestellte Regeleinrichtung zugeordnet. Die Regeleinrichtung dient dazu, den von der Recheneinheit **9** ermittelten Maschinenparameter an den Fahrantrieb weiterzuleiten. Eine dem Fahrantrieb zugeordnete Fahrgeschwindigkeitssteuerung ermöglicht sodann eine Ansteuerung des Fahrantriebs mit Vorgabe der ermittelten optimalen Fahrgeschwindigkeit.

Die Bestimmung des Maschinenparameters, d.h. einer einzustellenden Soll-Fahrgeschwindigkeit, erfolgt dabei wie folgt:

In einem ersten Schritt wird eine aktuelle Teilbreite des Mähdreschers **11** mittels des LiDAR-Sensors **10** erfasst. Die aktuelle Teilbreite wird sodann in einem zweiten Schritt als eine erste prognostizierte Vorfeldinformation an das Steuersystem **8** übermittelt. Im gleichen Zug erfasst der LiDAR-Sensor **10** die aktuelle Bestandshöhe **24** des abzuerntenden Felds **3** und übermittelt diese als dritte prognostizierte Vorfeldinformation an das Steuersystem **8.**

In einem dritten Schritt wird eine zweite prognostizierte Vorfeldinformation an das Steuersystem **8** übermittelt. Bei der zweiten prognostizierten Vorfeldinformation handelt es sich um eine Information, die einer Biomasseprognosekarte entnommen wurde. Bei der Information handelt es sich um einen Wert einer prognostizierten Biomasse in dem Vorfeld **6** des Mähdreschers **11.**

Die Biomasseprognosekarte wurde dabei zeitlich vorangegangen auf Basis von Satellitenbildern des abzuerntenden Felds **3** erstellt. Die aufgenommenen Satellitenbilder wurden mittels eines Satelliten erstellt und an eine auf der Erde angeordnete Datenverarbeitungseinrichtung übertragen, welche sodann eine Biomasseprognosekarte erstellt hat. Diese wurde wiederum an eine Datenübertragungseinrichtung übertragen, welche drahtlos an den Mähdrescher **11** übertragen wurde. Beispielhaft kann vorgesehen sein, dass die Biomasseprognosekarte des abzuerntenden Felds **3** in einer Speichereinheit des Steuersystems **8** des Mähdreschers **11** abgelegt ist und von der Recheneinheit **9** abgerufen werden kann.

Aus der ersten prognostizierten Vorfeldinformation, der zweiten prognostizierten Vorfeldinformation und der dritten prognostizierten Vorfeldinformation wird in einem nächsten Schritt ein voraussichtlicher Erntegutdurchsatz bestimmt. Auf Basis der prognostizierten Erntegutdurchsatzes wird sodann der Maschinenparameter mittels der Recheneinheit **9** des Steuersystems **8** bestimmt. Dieser wird anschließend von der Regeleinrichtung an die Fahrgeschwindigkeitssteuerung übertragen und zur Steuerung des Fahrantriebs genutzt. Die Fahrgeschwindigkeit des Mähdreschers **11** kann auf diese Weise optimal auf das abzuerntende Feld **3** und das zur Verfügung stehende Erntegut **4** angepasst werden.

Weiterhin umfasst der Mähdrescher **11** einen nicht in den Figuren gezeigten Sensor, der dem Mähdrescher **11** unmittelbar zugeordnet ist und eine Ist-Vorfeldinformation, beispielhaft eine Schnitthöhe bestimmt. Der Sensor ist dabei als Schnitthöhensensor ausgebildet.

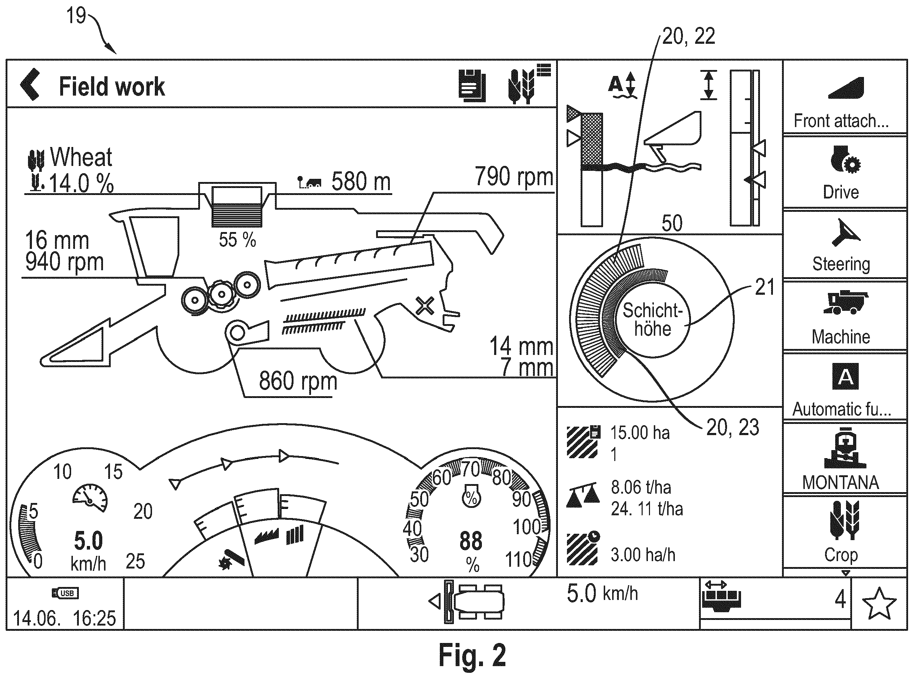

Weiterhin umfasst die Arbeitsmaschine **1** eine erfindungsgemäße Anzeigevorrichtung **19** zum Anzeigen der Vorfeldinformationen des geografischen Vorfelds **6** der Arbeitsmaschine **1.** Die Anzeigevorrichtung **19** für die selbstfahrende landwirtschaftliche Arbeitsmaschine **1** ist in der **Figur 2** gezeigt. Die Anzeigevorrichtung **19** weist zwei konzentrisch angeordnete Anzeigeelemente **20** auf, die jeweils in Form eines Kreisringausschnitts **22, 23,** ausgebildet sind. Ebenfalls konzentrisch angeordnet ist eine Zentralanzeige **21.** Letztere zeigt für den Benutzer der Arbeitsmaschine **1** eine aktuell mittels der Anzeigevorrichtung **19** zu betrachtende Vorfeldinformation, vorliegend eine Schichthöhe des abzuerntenden Felds **3,** an.

Ein erster, der Zentralanzeige **21** unmittelbar zugeordneter Kreisringausschnitt **22** zeigt die prognostizierte Schichthöhe an, während ein zweiter, um den ersten Kreisringausschnitt **22** angeordneter Kreisringausschnitt **23** einen Ist-Wert der aktuell an der Arbeitsmaschine **1** anliegenden Schichthöhe des Felds **3** anzeigt.

Der Ist-Wert der Schichthöhe wurde dabei mittels dem dem Mähdrescher **11** zugeordneten Schichthöhensensor ermittelt. Die prognostizierte Schichthöhe hingegen wurde mittels den dem Vorfelderfassungssystem **5** zugeordneten Sensoren **7** ermittelt.

Die Anzeigevorrichtung **19** ist mit dem Vorfelderfassungssystem **5** der Arbeitsmaschine **1** verbunden und dazu eingerichtet, die von dem Vorfelderfassungssystem **5** erfassten Vorfeldinformationen zu erhalten und diese laufend zu aktualisieren. Bei einer Veränderung der Ist-Vorfeldinformation oder der prognostizierten Vorfeldinformation ist vorgesehen, dass sich eine Länge des jeweiligen Kreisringausschnitts **22, 23,** ändert, d.h. entweder verlängert oder verkürzt. Die Veränderung der Länge des Kreisringausschnitts **22, 23,** erfolgt dabei dynamisch, d.h. fortwährend während des Ernteprozesses.

Weiterhin ist der Anzeigevorrichtung **19** eine nicht in den Figuren gezeigte Eingabeeinrichtung zugeordnet. Mittels der Eingabeeinrichtung lassen sich die Maschinenparameter und/oder eine Ernteprozessstrategie anpassen. Beispielsweise kann vorgesehen sein, dass der Benutzer der Arbeitsmaschine **1** mindestens einen Maschinenparameter und/oder die Ernteprozessstrategie ändern, sofern ein Vergleich der prognostizierten Vorfeldinformation mit der Ist-Vorfeldinformation eine Abweichung ergibt.

### Bezugszeichenliste

- 1: Arbeitsmaschine
- 2: Arbeitsorgan
- 3: Feld
- 4: Erntegut
- 5: Vorfelderfassungssystem
- 6: Vorfeld
- 7: Sensor
- 8: Steuersystem
- 9: Recheneinheit
- 10: LiDAR-Sensor
- 11: Mähdrescher
- 12: Dreschwerk
- 13: Abscheideanordnung
- 14: Reinigungsanordnung
- 15: Transportanordnung
- 16: Korntank
- 17: Fahrtrichtung
- 18: Fahrerkabine
- 19: Anzeigevorrichtung
- 20: Anzeigeelement
- 21: Zentralanzeige
- 22: erster Kreisringausschnitt
- 23: zweiter Kreisringausschnitt
- 24: Bestandshöhe

## Patentansprüche

1. Anzeigevorrichtung (19) für eine selbstfahrende landwirtschaftliche Arbeitsmaschine (1) zum Anzeigen mindestens einer Vorfeldinformation eines geografischen Vorfelds (6) der Arbeitsmaschine (1),
**dadurch gekennzeichnet, dass**
die Anzeigevorrichtung (19) dazu eingerichtet und geeignet ist, eine Ist-Vorfeldinformation sowie eine prognostizierte Vorfeldinformation des geografischen Vorfelds (6) anzuzeigen.

2. Anzeigevorrichtung (19) nach Anspruch 1, **dadurch gekennzeichnet, dass** die Anzeigevorrichtung (19) konzentrisch angeordnete Anzeigeelemente (20) in Form von Kreisringausschnitten (22, 23) aufweist, wobei die Ist-Vorfeldinformation einem ersten Kreisringausschnitt (22) zugeordnet ist, während die prognostizierte Vorfeldinformation einem zweiten Kreisringausschnitt (23) zugeordnet ist.

3. Anzeigevorrichtung (19) nach Anspruch 2, **dadurch gekennzeichnet, dass** eine Größe einer Anzeigefläche eines jeweiligen Anzeigeelements (20) dynamisch an einen zu visualisierenden Wert der Ist-Vorfeldinformation bzw. der prognostizierten Vorfeldinformation anpassbar ist.

4. Anzeigevorrichtung (19) nach Anspruch 2 oder 3, **dadurch gekennzeichnet, dass** die Anzeigevorrichtung (19) eine Zentralanzeige (21) aufweist, welche konzentrisch innerhalb der Anzeigeelemente (20) angeordnet ist.

5. Anzeigevorrichtung (19) nach einem der vorhergehenden Ansprüche, **dadurch gekennzeichnet, dass** es sich bei der Vorfeldinformation um eine Schichthöhe, eine Bestandsdichte, eine Schnitthöhe, eine Bestandshöhe (24), einen Biomasseertrag, eine Abreife eines Bestands, eine Befahrbarkeit, eine Lagerklassierung, eine Feldzone oder eine Teilbreite des geografischen Vorfelds (6) der Arbeitsmaschine (1) handelt.

6. Anzeigevorrichtung (19) nach einem der vorhergehenden Ansprüche, **dadurch gekennzeichnet, dass** die Anzeigevorrichtung (19) eine Eingabeeinrichtung zum Festlegen eines Zielwerts eines Maschinenparameters für ein Arbeitsorgan (2) der landwirtschaftlichen Arbeitsmaschine (1) und/oder die Arbeitsmaschine (1) selbst durch einen Benutzer der landwirtschaftlichen Arbeitsmaschine (1) umfasst.

7. Anzeigevorrichtung (19) nach einem der vorhergehenden Ansprüche, **dadurch gekennzeichnet, dass** die Anzeigevorrichtung (19) mit einem Vorfelderfassungssystem (5) der landwirtschaftlichen Arbeitsmaschine (1) verbindbar und eingerichtet ist, die von dem Vorfelderfassungssystem (5) erfasste Vorfeldinformation laufend zu aktualisieren.

8. Selbstfahrende landwirtschaftliche Arbeitsmaschine (1), umfassend eine Anzeigevorrichtung (19) nach einem der vorhergehenden Ansprüche.

9. Selbstfahrende landwirtschaftliche Arbeitsmaschine (1) nach Anspruch 8, **dadurch gekennzeichnet, dass** die Arbeitsmaschine (1) in Form eines Feldhäckslers oder eines Mähdreschers (13) ausgebildet ist.

## Claims

1. Display device (19) for a self-propelled agricultural working machine (1) for displaying at least one item of forefield information relating to a geographical forefield (6) of the working machine (1),
**characterized in that**
the display device (19) is configured and suitable for displaying actual forefield information and predicted forefield information relating to the geographical forefield (6).

2. Display device (19) according to Claim 1, **characterized in that** the display device (19) has concentrically arranged display elements (20) in the form of circular ring sections (22, 23), wherein the actual forefield information is assigned to a first circular ring section (22), while the predicted forefield information is assigned to a second circular ring section (23).

3. Display device (19) according to Claim 2, **characterized in that** a size of a display area of a respective display element (20) can be adapted dynamically to a value of the actual forefield information or the predicted forefield information to be visualized.

4. Display device (19) according to Claim 2 or 3, **characterized in that** the display device (19) has a central display (21) which is arranged concentrically within the display elements (20).

5. Display device (19) according to one of the preceding claims, **characterized in that** the forefield information is a layer height, a stock density, a cutting height, a stock height (24), a biomass yield, a stock maturity, navigability, a storage classification, a field zone or a partial width of the geographical forefield (6) of the working machine (1).

6. Display device (19) according to one of the preceding claims, **characterized in that** the display device (19) comprises an input apparatus for determining a target value of a machine parameter for a working element (2) of the agricultural working machine (1) and/or the working machine (1) itself by a user of the agricultural working machine (1).

7. Display device (19) according to one of the preceding claims, **characterized in that** the display device (19) can be connected to a forefield capture system (5) of the agricultural working machine (1) and is configured to continuously update the forefield information captured by the forefield capture system (5).

8. Self-propelled agricultural working machine (1) comprising a display device (19) according to one of the preceding claims.

9. Self-propelled agricultural working machine (1) according to Claim 8, **characterized in that** the working machine (1) is in the form of a forage harvester or a combine harvester (13).

## Revendications

1. Dispositif d'affichage (19) pour une machine de travail agricole automotrice (1) destiné à afficher au moins une information de zone avant d'une zone avant géographique (6) de la machine de travail (1),
**caractérisé en ce que**
le dispositif d'affichage (19) est conçu et adapté pour afficher des informations de zone avant réelles ainsi que des informations de zone avant géographique (6) prédites.

2. Dispositif d'affichage (19) selon la revendication 1, **caractérisé en ce que** le dispositif d'affichage (19) possède des éléments d'affichage (20) disposés concentriquement sous la forme de portions d'anneau circulaire (22, 23), les informations de zone avant réelles étant associées à une première portion d'anneau circulaire (22), alors que les informations de zone avant prédites sont associées à une deuxième portion d'anneau circulaire (23).

3. Dispositif d'affichage (19) selon la revendication 2, **caractérisé en ce qu'**une taille d'une surface d'affichage d'un élément d'affichage respectif (20) peut être adaptée dynamiquement à une valeur à visualiser des informations de zone avant réelles ou des informations de zone avant prédites.

4. Dispositif d'affichage (19) selon la revendication 2 ou 3, **caractérisé en ce que** le dispositif d'affichage (19) possède un affichage central (21), lequel est disposé concentriquement à l'intérieur des éléments d'affichage (20).

5. Dispositif d'affichage (19) selon l'une des revendications précédentes, **caractérisé en ce que** les informations de zone avant sont une hauteur de couche, une densité de peuplement, une hauteur de coupe, une hauteur de peuplement (24), un rendement en biomasse, une maturité d'un peuplement, une praticabilité, une classification du stock, une zone de champ ou une largeur partielle de la zone avant géographique (6) de la machine de travail (1).

6. Dispositif d'affichage (19) selon l'une des revendications précédentes, **caractérisé en ce que** le dispositif d'affichage (19) comprend un appareil d'entrée destiné à spécifier une valeur cible d'un paramètre de machine pour un organe de travail (2) de la machine de travail agricole (1) et/ou de la machine de travail (1) elle-même par un utilisateur de la machine de travail agricole (1).

7. Dispositif d'affichage (19) selon l'une des revendications précédentes, **caractérisé en ce que** le dispositif d'affichage (19) peut être connecté à un système de détection de zone avant (5) de la machine de travail agricole (1) et est conçu pour mettre à jour en continu les informations de zone avant détectées par le système de détection de zone avant (5).

8. Machine de travail agricole automotrice (1), comprenant un dispositif d'affichage (19) selon l'une des revendications précédentes.

9. Machine de travail agricole automotrice (1) selon la revendication 8, **caractérisée en ce que** la machine de travail (1) est réalisée sous la forme d'une récolteuse-hacheuse ou d'une moissonneuse-batteuse (13).
